(19) Europäisches Patentamt
European Patent Office
Office européen des brevets

(11) **EP 3 425 183 B1**

(12) **FASCICULE DE BREVET EUROPEEN**

(45) Date de publication et mention
de la délivrance du brevet:
**04.03.2020 Bulletin 2020/10**

(51) Int Cl.:
***F01N 11/00*** *(2006.01)*

(21) Numéro de dépôt: **18177741.8**

(22) Date de dépôt: **14.06.2018**

(54) **PROCÉDÉ DE DÉTERMINATION DU PASSAGE À L'ÉTAT SANS PRÉSENCE D'EAU LIQUIDE DANS UNE LIGNE D'ÉCHAPPEMENT COMPORTANT UN ORGANE DE DÉPOLLUTION**

METHODE ZUR FESTSTELLUNG DES ÜBERGANGS ZU EINEM ZUSTAND OHNE VORHANDENSEIN VON FLÜSSIGEM WASSER IN EINEM ABGASTRAKT MIT EINEM NACHBEHANDLUNGSELEMENT

METHOD FOR DETERMINATION OF THE PASSAGE TO A STATE WITHOUT PRESENCE OF LIQUID WATER IN AN EXHAUST LINE COMPRISING AN AFTERTREATMENT ELEMENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.07.2017 FR 1756239**

(43) Date de publication de la demande:
**09.01.2019 Bulletin 2019/02**

(73) Titulaire: **PSA Automobiles SA**
**78300 Poissy (FR)**

(72) Inventeurs:
• **LAIGLE, Emmanuel**
**92400 Courbevoie (FR)**
• **MARECHAL, Patrice**
**92250 La Garenne Colombes (FR)**

(56) Documents cités:
**JP-A- 2014 159 781      KR-A- 20050 010 310**
**KR-B1- 101 294 440      US-A1- 2016 194 996**

EP 3 425 183 B1

**Description**

La présente invention se rapporte au domaine des moteurs à combustion interne. L'invention concerne plus particulièrement la détermination du moment où il n'y a plus d'eau liquide dans la ligne d'échappement.

Les véhicules automobiles, équipés d'un moteur à combustion interne, sont pourvus de dispositifs de dépollution des gaz d'échappement.

On a constaté, au cours des années, un durcissement des normes anti-pollution auxquelles sont soumis tous les nouveaux véhicules. Dès lors, les dispositifs de dépollution des véhicules sont devenus plus sophistiqués, requérant différentes sondes, générant des problèmes de fiabilité, et engendrant des frais d'entretien importants pour les propriétaires des véhicules.

A l'exemple du document FR2986263, ces dispositifs de dépollution peuvent comprendre une sonde par exemple pour mesurer le taux de d'oxyde d'azote et/ou d'oxygène. Ces sondes sont des composants fragiles qui, pour fournir une mesure précise, ont besoin d'être chauffé à une température de fonctionnement (aux alentours de 800°C) et il convient de la protéger de certains éléments, notamment de l'eau sous forme liquide. La combustion, dans le moteur, d'un mélange air/carburant, provoque la création de vapeurs d'eau qui, en se refroidissant, se condense et forme de l'eau dans la ligne d'échappement.

L'eau ainsi générée est expulsée de la ligne d'échappement par les gaz d'échappement et peut, sur son parcours, entrer en contact avec la sonde. Lorsque la sonde est chauffée à 800°C, le contact local de l'eau avec la sonde provoque un choc thermique par refroidissement local de la sonde et, par conséquent, une dégradation de la sonde, voire une casse de celle-ci. Il en résulte une mise en défaut du dispositif de dépollution. Ces sondes doivent donc être amenées à leur température de fonctionnement après évaporation de toute eau sous forme liquide dans la ligne d'échappement.

Le document FR2986263 vise un chauffage de la sonde, mais est muet sur la détermination passage du point de rosée, autrement dit du moment où il n'y a plus d'eau liquide dans la ligne d'échappement.

Il existe donc un besoin pour déterminer ce moment où il n'y a plus d'eau liquide dans la ligne d'échappement.

Le document US 2016/0194996 A1 propose un procédé de détermination du contenu en eau condensée dans un organe de dépollution. Le procédé prend en compte les mesures de température en amont de et dans l'organe de dépollution, optionnellement aussi l'humidité ambiante, la température ambiante, le régime moteur et le débit de carburant.

Pour atteindre l'objectif ci-dessus, il est prévu selon l'invention un procédé de détermination du passage à l'état d'absence d'eau liquide, encore désigné passage de point de rosée, en sortie d'un organe de dépollution doté d'une phase active et disposé dans une ligne d'échappement de moteur à combustion interne, caractérisé en ce que :

- on détermine un gradient temporel de taux de stockage maximum en eau de l'organe de dépollution,
- on détermine à partir de ce gradient un débit d'eau stockable dans l'organe de dépollution, et lorsque ce débit d'eau stockable déterminé dans l'organe de dépollution indique que la phase active de l'organe de dépollution se vide de son eau et que le gradient devient nul on considère alors que le point de rosée est passé.

L'effet technique est d'avoir un suivi en continu de l'évolution de la présence d'eau dans l'organe de dépollution et ainsi de pouvoir déterminer précisément le moment où tout eau liquide est absente de la partie de ligne d'échappement dotée de l'organe de dépollution.

Diverses caractéristiques supplémentaires peuvent être prévues, seules ou en combinaisons :

Dans un mode de réalisation, le taux de stockage maximum $\psi(t)$ est obtenu par la relation :

$$\psi(t) = \frac{e^{\left[\ln\left(w_0 \rho_{H_2O_{liq}}\right) - \left[\ln\left(\frac{P_{H_2O_{in}}}{P_{satH_2O}}\right)\right]^2 \left(\frac{RT_{cata_{(t)}}}{\beta_{H_2O}}\right)^2 A_{pore}\right]}}{w_0 \rho_{H_2O_{liq}}}$$

Avec :

$W_0$ : taux de remplissage maximal par volume de la phase active de l'organe de dépollution,
$\beta_{H_2O}$ : affinité de la phase active de l'organe de dépollution avec l'eau,
$\rho_{H_2O_{liq}}$ : densité de l'eau liquide,
$P_{H_2O_{in}}$ : pression partielle d'eau entrant dans l'organe de dépollution,
$P_{satH_2O}$ : pression de vapeur saturante de l'eau,
R : constante des gaz parfaits,

*Tcata(t)* : température interne de l'organe de dépollution,

$A_{pore}$ : constante caractéristique de la taille des pores de la phase active de l'organe de dépollution,

t : indice d'itération de calcul en cours.

Selon un mode de réalisation, on détermine à partir du débit d'eau stockable si de l'eau est stockée ou libérée de la phase active ainsi que l'exotherme de stockage, respectivement l'endotherme de déstockage associé, cet exotherme, respectivement endotherme, étant utilisé pour mettre à jour, à l'itération de calcul suivante, la température interne de l'organe de dépollution.

Selon un mode de réalisation, la température interne *Tcata(t)* de l'organe de dépollution est déterminée par la relation :

$$T_{cata}(t) = \frac{\dot{Q}_m . c_{p_{gaz}} . T_{amont} + h. S. T_{ext} + \frac{m_{cata} . c_{p_{cata}}}{\tau} . T_{cata(t-1)} + ExoT_{(t-1)}}{\dot{Q}_m . c_{p_{gaz}} + h. S + \frac{m_{cata} . c_{p_{cata}}}{\tau}}$$

Avec :

$\dot{Q}_m$ : le débit de gaz d'échappement,

$c_{p_{gaz}}$ et $c_{p_{cata}}$ : respectivement la capacité thermique du gaz d'échappement et celle de l'organe de dépollution,

$T_{amont}$ et $T_{ext}$ : respectivement la température des gaz d'échappement en entrée de l'organe de dépollution et la température ambiante,

$h$ : le coefficient d'échange entre l'organe de dépollution et l'air ambiant,

$S$ : la surface d'échange entre l'organe de dépollution et l'air ambiant,

$m_{cata}$ : la masse de l'organe de dépollution,

*ExoT* : l'exotherme de stockage/endotherme de déstockage de l'eau,

t-1 : indice d'itération de calcul précédent.

Selon un mode de réalisation où la ligne d'échappement comporte plusieurs organes de dépollution dotés chacun d'une phase active, on considère que le point de rosée est passé en sortie de l'organe de dépollution le plus aval, relativement au sens d'écoulement des gaz d'échappement, lorsque le débit d'eau stockable déterminé dans chacun des organes de dépollution indique que sa phase active se vide de son eau et que son gradient temporel de taux de stockage maximum devient nul.

L'invention concerne aussi un calculateur, caractérisé en ce qu'il comprend les moyens d'acquisition, de traitement par instructions logicielles stockées dans une mémoire ainsi que les moyens de commande requis à mise en œuvre du procédé selon l'une quelconque des variantes précédemment décrites.

L'invention concerne aussi un ensemble moteur comprenant un moteur à combustion interne relié à une ligne d'échappement, cette ligne d'échappement comportant un organe de dépollution et une sonde ayant besoin d'être chauffé à une température de fonctionnement, caractérisé en ce qu'il comprend un tel calculateur.

L'invention concerne aussi un véhicule automobile, caractérisé en ce qu'il comprend un tel ensemble moteur pour son déplacement.

D'autres particularités et avantages apparaîtront à la lecture de la description ci-après d'un mode particulier de réalisation, non limitatif de l'invention, faite en référence aux figures dans lesquelles :

- La figure 1 est une représentation schématique d'un moteur à combustion interne équipé d'une ligne d'échappement permettant la dépollution des gaz d'échappement en sortie du moteur associé à un calculateur pour mise en œuvre du procédé de l'invention.
- La figure 2 est une représentation schématique d'une modélisation avec deux organes de dépollution.
- Les figures 3 et 4 illustrent l'évolution en fonction du temps respectivement des quantités d'eau et des températures dans le cas d'un démarrage à froid, pour un capteur situé après deux catalyseurs en sortie du moteur, sur un point de fonctionnement stabilisé.

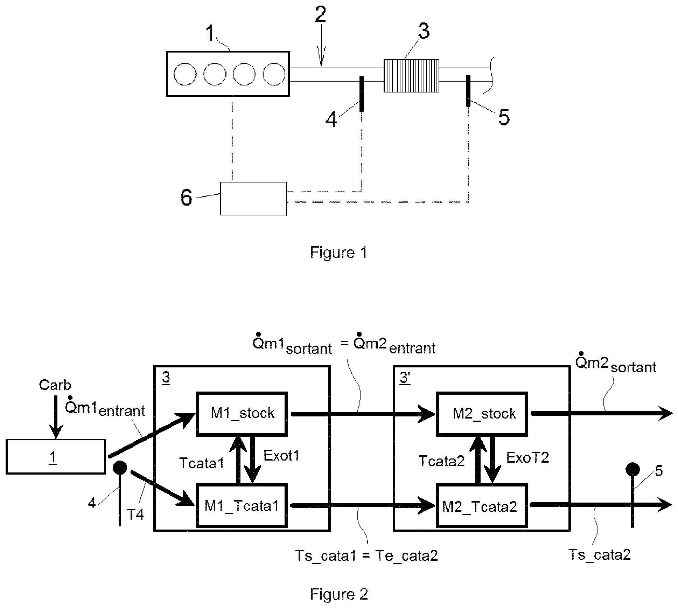

La figure 1 présente un moteur 1 à combustion interne, par exemple un moteur à allumage par compression, fonctionnant par exemple au gazole. Ce moteur 1 est relié à une ligne 2 d'échappement des gaz brûlés pour former un ensemble moteur. Un tel ensemble moteur peut équiper un véhicule automobile pour son déplacement.

La ligne d'échappement 2 dispose d'un organe 3 de dépollution, dans ce mode de réalisation, par exemple un catalyseur d'oxydation pour l'oxydation du monoxyde de carbone et l'oxydation des hydrocarbures imbrûlés. Cet organe de dépollution comprend un substrat qui sert de support à une phase active (en anglais : washcoat) qui contient les substances actives nécessaires au fonctionnement des catalyseurs. Cette phase active peut être une zéolithe et présenter une affinité avec l'eau.

La ligne d'échappement 2 dispose encore d'un capteur de température 4 en amont du catalyseur 3 d'oxydation et d'un capteur 5, par exemple une sonde à oxygène, en aval du catalyseur 3 d'oxydation. L'amont et l'aval sont ici définis relativement au sens d'écoulement des gaz d'échappement dans la ligne 2 d'échappement.

Les capteurs 4 et 5 sont reliées à un calculateur 6. Ce calculateur 6 comprenant les moyens d'acquisition, de traitement par instructions logicielles stockées dans une mémoire ainsi que les moyens de commande requis à mise en œuvre du procédé de l'invention détaillé après.

Comme déjà expliqué, afin d'obtenir une mesure précise certains capteurs reposent sur une cellule d'analyse qui doit être amenée à sa température de fonctionnement optimale. Cependant, cette montée en température doit être faite après évaporation de toute eau sous forme liquide dans la ligne d'échappement, car le contact de l'eau liquide et de cette cellule peut entraîner la détérioration voire la destruction de celle-ci en raison du choc thermique et rendre le capteur inopérant.

En effet, de l'eau est susceptible d'être stockée dans la ligne d'échappement lorsque la ligne d'échappement est froide, soit dans les situations de vie suivantes :

- pendant les phases de démarrage : la combustion du carburant dans le moteur génère de grandes quantités d'eau qui sont envoyées à l'échappement,
- pendant les phases d'arrêt du véhicule : l'humidité de l'air entraine un stockage d'eau par diffusion depuis l'aval de la ligne d'échappement.

Deux types de phénomènes sont à l'origine du stockage d'eau :

La chimisorption : interaction chimique avec les éléments de la phase active présent sur le substrat présent dans l'organe de dépollution,
La physisorption : interaction physique qui conduit à la condensation d'eau sur les parois froides des tubes métalliques de la ligne d'échappement et en surface des substrats.

Ainsi, la détermination du passage de ce moment où il n'y a plus d'eau liquide dans la ligne d'échappement en amont du capteur, appelé encore passage du point de rosée, est requise pour savoir si la chauffe du capteur peut ensuite être lancée. A cet effet, on doit s'assurer de l'absence d'eau dans l'organe de dépollution en amont du capteur. Si l'organe de dépollution contient de l'eau, et même si les gaz arrivant au capteur n'en contiennent plus, on sait qu'à terme l'eau de l'organe de dépollution sera libérée et va arriver sur le capteur. Afin d'estimer les flux d'eau dans la ligne d'échappement on représente ici l'organe de dépollution 3 par deux modèles : un modèle de stockage d'eau et un modèle d'estimation de la température interne de l'organe de dépollution.

En ce qui concerne le modèle de stockage d'eau, le taux maximum de stockage en eau, $\psi$, du catalyseur 3 peut être déterminée à partir de l'équation de Dubinin-Radushkevich :

$$\psi(t) = \frac{e^{\left[\ln\left(w_0 \rho_{H_2O_{liq}}\right) - \left[\ln\left(\frac{P_{H_2O_{in}}}{P_{satH_2O}}\right)\right]^2 \left(\frac{RT_{cata(t)}}{\beta_{H_2O}}\right)^2 A_{pore}\right]}}{w_0 \rho_{H_2O_{liq}}}$$

Avec :

$W_0$ : le taux de remplissage maximal par volume de la phase active de l'organe de dépollution,
$\beta_{H_2O}$ : l'affinité de la phase active de l'organe de dépollution avec l'eau,
$\rho_{H_2O_{liq}}$ : la densité de l'eau liquide,
$P_{H_2O_{in}}$ : La pression partielle d'eau entrant dans l'organe de dépollution,
$P_{satH_2O}$ : La pression de vapeur saturante de l'eau, qui est fonction de la température des gaz d'échappement,
$R$ : la constante des gaz parfaits,
$Tcata(t)$ : la température interne de l'organe de dépollution,
$A_{pore}$ : une constante caractéristique de la taille des pores de la phase active de l'organe de dépollution.

Ce modèle à l'avantage d'être un modèle simple basé sur des valeurs spécifiques à chaque technologie d'organe de dépollution, mais simples à obtenir.

En ce qui concerne le modèle d'estimation de la température interne de l'organe de dépollution, sa température interne, Tcata, peut être déterminée à partir d'un bilan de puissance thermique appliqué à cet organe de dépollution :

$$T_{cata}(t) = \frac{\dot{Q}_m . c_{p_{gaz}} . T_{amont} + h.S.T_{ext} + \frac{m_{cata} . c_{p_{cata}}}{\tau} . T_{cata(t-1)} + ExoT_{(t-1)}}{\dot{Q}_m . c_{p_{gaz}} + h.S + \frac{m_{cata} . c_{p_{cata}}}{\tau}}$$

Avec :

$\dot{Q}_m$ : le débit de gaz d'échappement,

$c_{p_{gaz}}$ et $c_{p_{cata}}$ : respectivement la capacité thermique du gaz et celle de l'organe de dépollution,

$T_{cata}$, $T_{amont}$ et $T_{ext}$ : respectivement la température interne de l'organe de dépollution, la température des gaz d'échappement en entrée de l'organe de dépollution et la température ambiante,

$h$ : le coefficient d'échange entre l'organe de dépollution et l'air ambiant,

$S$ : la surface d'échange entre l'organe de dépollution et l'air ambiant,

$m_{cata}$ : la masse de l'organe de dépollution,

$ExoT$ : l'exotherme de stockage/endotherme de déstockage de l'eau.

A partir de ce modèle, le débit d'eau stockable, $\dot{Q}_{m_{stockable}}$ dans l'organe de dépollution peut se définir à partir du gradient temporel de taux de stockage maximum de l'organe de dépollution, :

$$\frac{\psi(t) - \psi(t-1)}{\Delta t} w_0 . \varphi_{H_2O_{liq}} . Vol_{cata} = \dot{Q}_{m_{stockable}\ (g/s)}$$

Avec :

$Vol_{cata}$ : le volume de l'organe de dépollution

$\varphi_{H_2O_{liq}}$ : la masse volumique de l'eau liquide

Les indices t et t-1 indiquent respectivement le pas de calcul en cours et le pas de calcul précédent. Par conséquent, $\Delta t$ est la durée entre deux itérations de calcul.

Le débit d'eau stockable, $\dot{Q}_{m_{stockable}}$, déterminé par la relation précitée peut être positif ou négatif.

Si le débit d'eau stockable, $\dot{Q}_{m_{stockable}}$, est positif, cela signifie que l'on peut ajouter de l'eau dans l'organe de dépollution). Dans ce cas, le débit d'eau stocké, $\dot{Q}_{m_{stocké}}$ est alors défini comme le minimum entre le débit d'eau entrant, $\dot{Q}_{m_{entrant}}$ et le débit d'eau stockable, $\dot{Q}_{m_{stockable}}$, dans l'organe de dépollution :

$$\dot{Q}_{m_{stocké}\ (g/s)} = \min\left(\dot{Q}_{m_{entrant}}, \dot{Q}_{m_{stockable}}\right)$$

On a alors deux possibilités :

Si $\dot{Q}_{m_{stocké}} = Q_{m_{entrant}}$ alors le débit d'eau sortant de l'organe de dépollution, $\dot{Q}_{m_{sortant}} = 0$, ce qui signifie que toute l'eau qui entre dans l'organe de dépollution y est stockée.

Si $\dot{Q}_{m_{stocké}} = \dot{Q}_{m_{stockable}}$ alors $\dot{Q}_{m_{sortant}} = \dot{Q}_{m_{entrant}} - \dot{Q}_{m_{stockable}}$, ce qui signifie que l'organe de dépollution stocke ce qu'il peut admettre, le reste de l'eau sort de l'organe de dépollution.

Si le débit d'eau stockable, $\dot{Q}_{m_{stockable}}$, est négatif, cela signifie que l'organe de dépollution se vide de son eau. Dans ce cas, la masse d'eau stockée $\dot{Q}_{m_{stocké}}$, est définie comme :

$$Q_{m_{stocké}} = \psi(t) . w_0 . \varphi_{H_2O_{liq}} . Vol_{cata}$$

et $\dot{Q}_{m_{sortant}} = \dot{Q}_{m_{entrant}} - \dot{Q}_{m_{stockable}}$,

Ainsi dans le cas où le débit d'eau stockable, $\dot{Q}_{m_{stockable}}$, est négatif, ce qui indique que la phase active de l'organe de dépollution se vide de son eau, et que le gradient de taux maximal de stockage $\psi(t)$ devient nul, on est assuré que le catalyseur est bien vide de son eau. On considère alors que le point de rosée en sortie de l'organe de dépollution est passé.

La figure 2 présente un exemple de fonctionnement pour l'activation de la chauffe d'un capteur 5 situé en aval de deux catalyseurs 3 et 3' en sortie du moteur 1.

A partir du carburant, Carb, injecté dans le moteur 1, on peut déterminer l'eau générée par la combustion en continu à partir par exemple de l'équation de combustion simplifiée :

$$Carburant + O_2 \rightarrow CO_2 + H_2O$$

On détermine ainsi le débit d'eau entrant, $\dot{Q}_{m1\,entrant}$, dans le premier catalyseur 3. La sonde de température 4 détermine la température T4 des gaz d'échappement en entrée de ce premier catalyseur 3.

L'eau de combustion, $\dot{Q}_{m1\,entrant}$, et la température T4 en sortie du moteur 1 sont injectés dans le premier modèle du catalyseur 3 le plus amont. A chaque itération de calcul du calculateur :

- on détermine la température interne du catalyseur estimée, Tcata1, par le modèle de température, M1_Tcata1,
- cette température interne du catalyseur estimée, Tcata1, est entrée dans le modèle de stockage d'eau, M1_stock, qui détermine le taux maximum de stockage, $\psi 1(t)$, ce qui permet de déterminer ensuite le débit d'eau débit d'eau stockable, $\dot{Q}_{m1\,stockable}$, celui stockée ou déstockée et l'exotherme ou endotherme, ExoT1, associé. On a un exotherme lors du stockage de l'eau dans la phase active du catalyseur 3 car la création des liaisons chimiques entre l'eau et le catalyseur 3 libère de l'énergie. On a un endotherme lors du déstockage de l'eau de la phase active car la destruction de ces liaisons requiert de l'énergie. Cet exotherme ou endotherme, ExoT1, est utilisé pour mettre à jour, à l'itération suivante, la température du catalyseur Tcata1.

Le débit d'eau sortant, $\dot{Q}_{m1\,sortant}$, du premier catalyseur 3 et la température en sortie, Ts_cata1 qui correspond à Tcata1, du premier catalyseur 3 sont injectés dans le second modèle du catalyseur suivant 3', c'est-à-dire que le débit d'eau, $\dot{Q}_{m2\,entrant}$, entrant dans le second catalyseur 3' est égale à $\dot{Q}_{m1\,sortant}$ et que la température, Te_cata2, en entrée du second catalyseur 3' est égale à Ts_cata1.

Comme précédemment, le modèle de température, M2_Tcata1, du second catalyseur 3' détermine la température interne du catalyseur estimée, Tcata2, et le modèle de stockage d'eau, M2_stock, détermine le taux maximum de stockage, $\psi 2(t)$, ce qui permet de déterminer ensuite le débit d'eau débit d'eau stockable, $\dot{Q}_{m2\,stockable}$, celui stockée ou déstockée et l'exotherme ou endotherme, ExoT2, associé.

Lorsque les modèles de tous les catalyseurs, ici les deux catalyseurs 3, 3' indiquent que ceux-ci ne contiennent plus d'eau, on considère que le point de rosée est passé en sortie de l'organe de dépollution 3' le plus aval, relativement au sens d'écoulement des gaz d'échappement, on peut démarrer la chauffe du capteur 5 sans risque. Quand la ligne 2 d'échappement est suffisamment chaude, l'eau de la combustion ne peut plus être stockée dans la ligne.

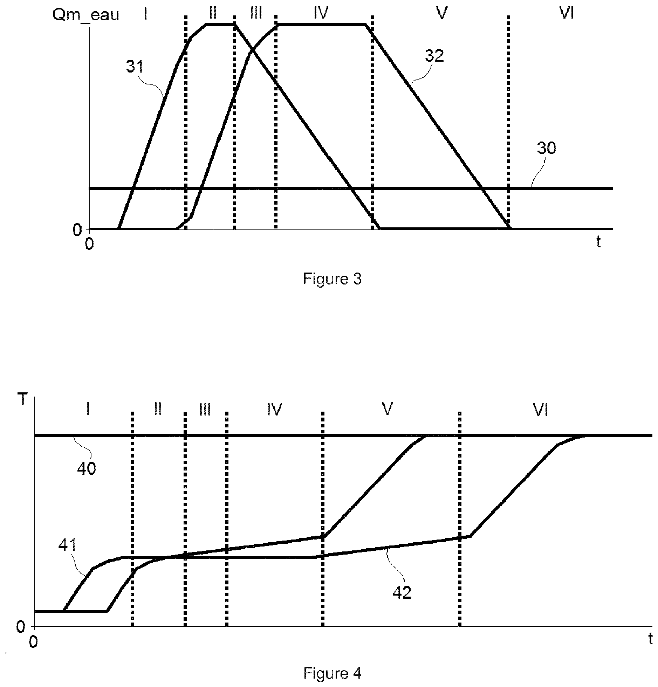

En référence aux figures 3 et 4 est illustré l'évolution en fonction du temps, t, respectivement des quantités d'eau, Qm_eau, et des températures, T, dans le cas d'un démarrage à froid, pour un capteur situé après deux catalyseurs en sortie du moteur, sur un point de fonctionnement stabilisé.

Le démarrage est découpé en six phases notées de I à VI. Sur la figure 3, La courbe 30 indique la quantité d'eau produite par le moteur, la courbe 31 indique la quantité d'eau dans le premier catalyseur et la courbe 32 indique la quantité d'eau dans le second catalyseur. Sur la figure 4, la courbe 40 indique la température des gaz en sortie du moteur, la courbe 41 indique la température interne du premier catalyseur et la courbe 42 la température interne du second catalyseur.

Phase I : La ligne d'échappement est froide et les deux catalyseurs ne contiennent pas d'eau. L'eau en sortie du moteur est stockée sur le premier catalyseur, l'exotherme induit et l'air chaud issu du moteur font monter sa température interne. Le second catalyseur ne reçoit pas d'eau, tout est stocké par le premier.

Phase II : Le premier catalyseur a atteint son stockage maximum en eau, l'eau en sortie moteur passe à travers et va désormais se stocker dans le second catalyseur, dont la température interne commence à monter.

Phase III : Le premier catalyseur continue de chauffer grâce aux calories fournies par le moteur, la capacité de stockage diminuant avec la température, il ne peut plus conserver toute l'eau qu'il contient et commence à se vider : l'endotherme induit par le déstockage d'eau ralentit la montée en température du premier catalyseur. Le second catalyseur continue à se remplir par l'eau venant du moteur et l'eau déstockée par le premier catalyseur.

Phase IV : Le premier catalyseur poursuit le déstockage de son eau et le second catalyseur est désormais saturé, autrement dit il a atteint son stockage maximum en eau.

Phase V : Le premier catalyseur est vide, il poursuit donc sa montée en température plus rapidement. La température du second catalyseur augmente elle aussi, il ne peut plus conserver l'eau qu'il contient et se vide progressivement. Comme précédemment, l'endotherme de déstockage d'eau ralentit sa montée en température.

Phases VI : Les deux catalyseurs sont désormais vides, et le second catalyseur monte rapidement en température à son tour. La ligne est suffisamment chauffée et ne peut plus stocker d'eau. On peut alors lancer la chauffe du capteur en aval sans risque.

L'invention ne se limite pas au mode de réalisation décrit. En variante, le moteur peut être un moteur à combustion interne à allumage commandé, fonctionnant par exemple à l'essence. L'organe de dépollution peut être différent d'un catalyseur d'oxydation. L'organe de dépollution peut être par exemple un catalyseur trois voies, un dispositif de réduction catalytique sélective des oxydes d'azote, un filtre à particules, ...

En variante, la sonde peut être une sonde de mesure des oxydes d'azote, une telle sonde ayant également une cellule sensible besoin d'être chauffée à une température de fonctionnement. En variante encore la sonde de température 4 peut être remplacée par un estimateur de température.

L'invention permet une réduction du risque de dégradation des capteurs et une économie d'une sonde de température au niveau de chaque capteur devant être chauffé à une température de fonctionnement.

## Revendications

1. Procédé de détermination du passage à l'état d'absence d'eau liquide, encore désigné passage de point de rosée, en sortie d'un organe de dépollution (3, 3') doté d'une phase active et disposé dans une ligne d'échappement (2) de moteur (1) à combustion interne, **caractérisé en ce que** :

   - on détermine un gradient temporel de taux de stockage maximum ($\psi(t)$) en eau de l'organe de dépollution,
   - on détermine à partir de ce gradient un débit d'eau stockable dans l'organe de dépollution ($\dot{Q}_{mstockable}$),
   et lorsque ce débit d'eau stockable ($\dot{Q}_{mstockable}$) déterminé dans l'organe de dépollution indique que la phase active de l'organe de dépollution se vide de son eau et que le gradient devient nul on considère alors que le point de rosée est passé.

2. Procédé selon la revendication 1, **caractérisé en ce que** le taux de stockage maximum ($\psi(t)$) en eau est obtenu par la relation :

$$\psi(t) = \frac{e^{\left[\ln\left(w_0 \rho_{H_2O_{liq}}\right) - \left[\ln\left(\frac{P_{H_2O_{in}}}{P_{satH_2O}}\right)\right]^2 \left(\frac{RT_{cata(t)}}{\beta_{H_2O}}\right)^2 A_{pore}\right]}}{w_0 \rho_{H_2O_{liq}}}$$

Avec :

   $w_0$ : taux de remplissage maximal par volume de la phase active de l'organe de dépollution,
   $\beta_{H_2O}$ : affinité de la phase active de l'organe de dépollution avec l'eau,
   $\rho_{H_2O_{liq}}$ : densité de l'eau liquide,
   $P_{H_2O_{in}}$ : pression partielle d'eau entrant dans l'organe de dépollution,
   $P_{satH_2O}$ : pression de vapeur saturante de l'eau,
   $R$ : constante des gaz parfaits,
   $Tcata(t)$ : température interne de l'organe de dépollution,
   $A_{pore}$ : constante caractéristique de la taille des pores de la phase active de l'organe de dépollution,
   t : indice d'itération de calcul en cours.

3. Procédé selon la revendication 1 ou la revendication 2, **caractérisé en ce que** l'on détermine à partir du débit d'eau stockable ($\dot{Q}_{mstockable}$) si de l'eau est stockée ou libérée de la phase active ainsi que l'exotherme de stockage, respectivement l'endotherme de déstockage, associé (ExoT), cet exotherme, respectivement endotherme, étant utilisé pour mettre à jour, à l'itération de calcul suivante, la température interne ($Tcata(t)$) de l'organe de dépollution.

4. Procédé selon la revendication 3, **caractérisé en ce que** la température interne ($Tcata(t)$) de l'organe de dépollution est déterminée par la relation :

$$T_{cata}(t) = \frac{\dot{Q}_m.c_{p_{gaz}}.T_{amont} + h.S.T_{ext} + \frac{m_{cata}.c_{p_{cata}}}{\tau}.T_{cata(t-1)} + ExoT_{(t-1)}}{\dot{Q}_m.c_{p_{gaz}} + h.S + \frac{m_{cata}.c_{p_{cata}}}{\tau}}$$

Avec :

$\dot{Q}_m$ : le débit de gaz d'échappement,

$c_{p_{gaz}}$ et $c_{p_{cata}}$ : respectivement la capacité thermique du gaz d'échappement et celle de l'organe de dépollution,

$T_{amont}$ et $T_{ext}$ : respectivement la température des gaz d'échappement en entrée de l'organe de dépollution et la température ambiante,

$h$ : le coefficient d'échange entre l'organe de dépollution et l'air ambiant,

$S$ : la surface d'échange entre l'organe de dépollution et l'air ambiant,

$m_{cata}$ : la masse de l'organe de dépollution,

$ExoT$ : l'exotherme de stockage/endotherme de déstockage de l'eau,

t-1 : indice d'itération de calcul précédent.

5. Procédé selon l'une quelconque des revendications précédentes, **caractérisé en ce que** la ligne d'échappement comportant plusieurs organes de dépollution (3, 3') dotés chacun d'une phase active, on considère que le point de rosée est passé en sortie de l'organe de dépollution (3') le plus aval, relativement au sens d'écoulement des gaz d'échappement, lorsque le débit d'eau stockable ($\dot{Q}_{m_{stockable}}$) déterminé dans chacun des organes de dépollution indique que sa phase active se vide de son eau et que son gradient temporel de taux de stockage maximum ($\psi(t)$) en eau devient nul.

6. Calculateur (6), **caractérisé en ce qu'**il comprend les moyens d'acquisition, de traitement par instructions logicielles stockées dans une mémoire ainsi que les moyens de commande requis à mise en œuvre du procédé selon l'une quelconque des revendications précédentes.

7. Ensemble moteur comprenant un moteur (1) à combustion interne relié à une ligne (2) d'échappement, cette ligne (2) d'échappement comportant un organe (3) de dépollution et une sonde (5) ayant besoin d'être chauffé à une température de fonctionnement, **caractérisé en ce qu'**il comprend un calculateur (6) selon la revendication 6.

8. Véhicule automobile, **caractérisé en ce qu'**il comprend un ensemble moteur selon la revendication précédente pour son déplacement.

**Patentansprüche**

1. Methode zur Feststellung des Übergangs auf den Zustand ohne Vorhandensein von flüssigem Wasser, auch Taupunktübergang genannt, am Ausgang eines Nachbehandlungselements (3, 3'), das mit einer aktiven Phase versehen ist und in einem Abgastrakt (2) einer Brennkraftmaschine (1) angeordnet ist, **dadurch gekennzeichnet, dass**:

- ein Zeitgradient einer maximalen Lagerrate $(\psi(t))$ an Wasser des Nachbehandlungselements bestimmt wird,

- ausgehend von diesem Gradienten ein Wasserdurchsatz, der in dem Nachbehandlungselement lagerbar ist,

bestimmt wird $(\dot{Q}_{m_{stockable}})$,

und, wenn dieser Durchsatz an lagerbarem Wasser $(\dot{Q}_{m_{stockable}})$, der in dem Nachbehandlungselement bestimmt wird, angibt, dass sich die aktive Phase des Nachbehandlungselements ihres Wassers entleert, und dass der Gradient null wird, davon ausgegangen wird, dass der Taupunkt überschritten wurde.

2. Methode nach Anspruch 1, **dadurch gekennzeichnet, dass** die maximale Lagerrate $(\psi(t))$ an Wasser durch folgende Gleichung erhalten wird:

$$\psi(t) = \frac{e^{\left[\ln\left(w_0 \rho_{H_2O_{liq}}\right) - \left[\ln\left(\frac{P_{H_2O_{in}}}{P_{satH_2O}}\right)\right]^2 \left(\frac{RT_{cata(t)}}{\beta_{H_2O}}\right)^2 A_{pore}\right]}}{w_0 \rho_{H_2O_{liq}}}$$

wobei

$w_0$: maximale Füllrate pro Volumen der aktiven Phase des Nachbehandlungselements,
$\beta_{H_2O}$: Affinität der aktiven Phase des Nachbehandlungselements mit Wasser,
$\rho_{H_2O_{liq}}$: Dichte des flüssigen Wassers,
$P_{H_2O2_{in}}$: Teildruck von Wasser, das in das Nachbehandlungselement eintritt,
$P_{satH_2O}$: sättigender Dampfdruck des Wassers,
$R$: Konstante der idealen Gase,
$Tcata(t)$: Innentemperatur des Nachbehandlungselements
$A_{pore}$: charakteristische Konstante der Größe der Poren der aktiven Phase des Nachbehandlungselements,
$t$: aktueller Berechnungsiterationsindex.

3. Methode nach Anspruch 1 Anspruch 2, **dadurch gekennzeichnet, dass** ausgehend von dem lagerbaren Wasserdurchsatz $(\overset{\circ}{Q}_{m_{stockable}})$, bestimmt wird, ob das Wasser gelagert oder aus der aktiven Phase freigegeben wird, sowie der Lagerexotherm bzw. der assoziierte Auslagerendotherm (ExoT), dieser Exotherm bzw. Endotherm verwendet wird, um bei der folgenden Recheniteration die Innentemperatur *(Tcata(t))* des Nachbehandlungselements zu aktualisieren.

4. Methode nach Anspruch 3, **dadurch gekennzeichnet, dass** die Innentemperatur *(Tcata(t))* des Nachbehandlungselements durch folgende Gleichung bestimmt wird:

$$T_{cata}(t) = \frac{\dot{Q}_m \cdot c_{p_{gaz}} \cdot T_{amont} + h.S.T_{ext} + \frac{m_{cata} \cdot c_{p_{cata}}}{\tau} \cdot T_{cata(t-1)} + ExoT_{(t-1)}}{\dot{Q}_m \cdot c_{p_{gaz}} + h.S + \frac{m_{cata} \cdot c_{p_{cata}}}{\tau}}$$

wobei:

$\overset{\circ}{Q}_m$: der Abgasdurchsatz,
$c_{P_{gaz}}$ und $c_{P_{cata}}$ jeweils die Wärmekapazität des Abgases und die des Nachbehandlungselements,
$T_{amont}$ und $T_{ext}$: jeweils die Temperatur der Abgase am Eingang des Nachbehandlungselements und die Umgebungstemperatur,
$h$: der Austauschkoeffizient zwischen dem Nachbehandlungselement und der Umgebungsluft,
$S$: die Austauschoberfläche zwischen dem Nachbehandlungselement und der Umgebungsluft,
$m_{cata}$: die Masse des Nachbehandlungselements,
*ExoT*: der Lager-/Auslagerexotherm des Wassers,
$t-1$: vorhergehender Berechnungsiterationsindex.

5. Methode nach einem der vorstehenden Ansprüche, **dadurch gekennzeichnet, dass**, da die Abgasleitung mehrere Nachbehandlungselemente (3, 3') umfasst, die jeweils mit einer aktiven Phase versehen sind, angenommen wird, dass der Taupunkt am Ausgang des am weitesten stromabwärts liegenden Nachbehandlungselements (3') in Bezug auf die Strömungsrichtung der Abgase überschritten wird, wenn der Durchsatz an lagerbarem Wasser

$$(\overset{\circ}{Q}_{m_{stockable}}),$$

der in jedem der Nachbehandlungselemente bestimmt wird, angibt, dass seine aktive Phase sich ihres Wassers entleert, und dass sein zeitlicher Gradient der maximalen Lagerrate *(ψ(t))* an Wasser null wird.

6. Rechner (6), **dadurch gekennzeichnet, dass** er Mittel zum Erfassen, zum Verarbeiten durch Softwareanweisungen, die in einem Speicher gespeichert sind, sowie Befehlsmittel umfasst, die für die Umsetzung der Methode nach einem der vorstehenden Ansprüche erforderlich sind.

7. Antriebsbaugruppe, die eine Brennkraftmaschine (1) umfasst, die mit einer Abgasleitung (2) verbunden ist, wobei die Abgasleitung (2) ein Nachbehandlungselement (3) und eine Sonde (5) umfasst, die auf eine Betriebstemperatur erhitzt werden muss, **dadurch gekennzeichnet, dass** sie einen Rechner (6) nach Anspruch 6 umfasst.

8. Kraftfahrzeug, **dadurch gekennzeichnet, dass** es eine Antriebsbaugruppe nach dem vorstehenden Anspruch für sein Fahren umfasst.

**Claims**

1. A method for determination of the passage to a state without presence of liquid water, also known as the dewpoint transition, at the outlet of an aftertreatment element (3, 3') provided with an active phase and disposed in an exhaust line (2) of an internal combustion engine (1), **characterized in that**:

   - a time gradient is determined of maximum storage rate $(\psi(t))\mu$ of water of the aftertreatment element,
   - from this gradient a flow rate is determined of water which is able to be stored in the aftertreatment element

$$(\overset{\circ}{m}_{stockable})$$

   and when this flow rate of storable water

$$(\overset{\circ}{m}_{stockable})$$

   determined in the aftertreatment element indicates that the active phase of the aftertreatment element is emptied of its water and that the gradient becomes zero, it is then considered that the dew point has passed.

2. The method according to claim 1, **characterized in that** the maximum storage rate $(\psi(t))$ of water is obtained by the equation:

$$\psi(t) = \frac{e^{\left[\ln\left(w_0 \rho_{H_2O_{liq}}\right) - \left[\ln\left(\frac{P_{H_2O_{in}}}{P_{satH_2O}}\right)\right]^2 \left(\frac{RT_{cata(t)}}{\beta_{H_2O}}\right)^2 A_{pore}\right]}}{w_0 \rho_{H_2O_{liq}}}$$

   with:

   $w_0$: rate of maximum filling by volume of the active phase of the aftertreatment element,
   $\beta_{H_2O}$: affinity of the active phase of the aftertreatment element with the water,
   $\rho_{H_2O_{liq}}$: density of the liquid water,
   $P_{H_2O_{in}}$: partial pressure of water entering the aftertreatment element,
   $P_{satH_2O}$: saturation vapour pressure of the water,
   $R$: constant of the perfect gases,
   $T_{cata(t)}$: internal temperature of the aftertreatment element,
   $A_{pore}$: characteristic constant of the size of the pores of the active phase of the aftertreatment element,
   t: current calculation iteration index.

3. The method according to claim 1 or claim 2, **characterized in that** it is determined from the flow of storable water

$$(\overset{\circ}{\dot{m}}_{stockable})$$

if the water is stored or released from the active phase and the associated storage exotherm, respectively release from storage endotherm (ExoT), this exotherm, respectively endotherm, being used for updating, at the following calculation iteration, the internal temperature *(Tcata(t))* of the aftertreatment element.

4. The method according to claim 3, **characterized in that** the internal temperature *(Tcata(t))* of the aftertreatment element is determined by the equation:

$$T_{cata}(t) = \frac{\dot{Q}_m \cdot c_{p_{gaz}} \cdot T_{amont} + h.S.T_{ext} + \frac{m_{cata} \cdot c_{p_{cata}}}{\tau} \cdot T_{cata(t-1)} + ExoT_{(t-1)}}{\dot{Q}_m \cdot c_{p_{gaz}} + h.S + \frac{m_{cata} \cdot c_{p_{cata}}}{\tau}}$$

with:

$$\dot{m}_m :$$

the flow of exhaust gas,

$c_{P_{gaz}}$ and $c_{P_{cata}}$ : respectively the thermal capacity of the exhaust gas and that of the aftertrement element,
$T_{amont}$ and $T_{ext}$: respectively the temperature of the exhaust gases at the inlet of the aftertreatment element and the ambient temperature,
$h$: the coefficient of exchange between the aftertreatment element and the ambient air,
$S$: the exchange surface between the aftertreatment element and the ambient air,
$m_{cata}$ the mass of the aftertreatment element,
*ExoT*: the storage exotherm/release from storage endotherm of the water,
t-1: preceding calculation iteration index.

5. The method according to any one of the preceding claims, **characterized in that** the exhaust line comprising several aftertreatment elements (3, 3') each provided with an active phase, it is considered that the dew point is passed at the most downstream outlet of the aftertreatment element (3'), relative to the direction of flow of the exhaust gases, when the storable water flow rate

$$(\overset{\circ}{\dot{m}}_{stockable})$$

determined in each of the aftertreatment elements indicates that its active phase is emptied of its water and that its time gradient of maximum storage rate *(ψ(t))* of water becomes zero.

6. A computer (6), **characterized in that** it includes acquisition means, means for processing by software instructions stored in a memory and also the control means required for implementaiton of the method according to any one of the preceding claims.

7. An engine assembly including an internal combustion engine (1) connected to an exhaust line (2), this exhaust line (2) comprising an aftertreatment element (3) and a sensor (5) needing to be heated to an operating temperature, **characterized in that** it includes a computer (6) according to claim 6.

8. A motor vehicle, **characterized in that** it includes an engine assembly according to the preceding claim for its movement.

Figure 1

$\dot{Q}m1_{sortant} = \dot{Q}m2_{entrant}$

$\dot{Q}m2_{sortant}$

Carb

$\dot{Q}m1_{entrant}$

Figure 2

Figure 3

Figure 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2986263

- US 20160194996 A1